# EUROPÄISCHE PATENTSCHRIFT

(11) **EP 1 931 494 B1**
(45) Veröffentlichungstag und Bekanntmachung des Hinweises auf die Patenterteilung: **28.03.2012**
(21) Anmeldenummer: 06792108.0
(22) Anmeldetag: 15.09.2006
(51) Int. Cl.: B23K 20/12, B23K 33/00, E04C 2/40, B23K 101/04

(54) **VERBINDUNGSELEMENT**
JOINING ELEMENT
ELEMENT D'ASSEMBLAGE

(30) Priorität: 06.10.2005 DE 102005048001
(43) Veröffentlichungstag der Anmeldung: 18.06.2008
(73) Patentinhaber: EURO-COMPOSITES S.A., L-6401 Echternach (LU)
(72) Erfinder: HEINEN, Serge, B-4780 St. Vith (BE); WILLKOMM, Horst, 54666 Irrel (DE); KONZ, Harald, 54329 Konz (DE)
(74) Vertreter: Bohnenberger, Johannes
(86) Internationale Anmeldenummer: PCT/EP2006/009027
(87) Internationale Veröffentlichungsnummer: WO 2007/039073

(56) Entgegenhaltungen:
- EP-A1- 1 055 478
- JP-A- 11 267 859
- JP-A- 11 350 616
- JP-A- 2001 162 383
- US-A1- 2004 065 716

## Beschreibung

Die Erfindung betrifft ein Verbindungselement, das aus mindestens zwei aneinander schweißbaren Profilelementen besteht wie es z.B. aus der JP 11 267 859 bekannt ist.

In vielen Fällen müssen Bauteile, insbesondere flächige Bauteile, über längere Schweißnähte miteinander verbunden werden. Hierzu wird oftmals Laserschweißen angewendet, jedoch ist diese Methode aufwändig.

Verbindungselemente, also Flächenelemente, wie sie z.B. aus der GB 2 228 277 A bekannt sind, werden zum Aufbau insbesondere von Wänden vielfältig verwendet. Ein typisches Beispiel hierfür stellen im Eisenbahnbau z.B. Waggonkästen dar oder auch Bauteile in Flugzeugen. Großflächige Verbindungselemente werden im Allgemeinen aus mehreren Profilelementen hergestellt, die an ihren Rändern miteinander verschweißt werden.

Insbesondere dann, wenn eine Vielzahl von Profilelementen zur Bildung sehr großflächiger Verbindungselemente zusammengeschweißt werden sollen und diese Profilelemente noch dazu aus dünnwandigem Material - z.B. im Flugzeugbau -, insbesondere aus Aluminium bestehen, ist das Zusammenschweißen außerordentlich aufwändig.

Aus der JP 2004 230412 ist ein Verbindungselement bekannt, das aus zwei Profilelementen besteht, die an ihrer Unterseite über eine hakenförmige Verbindung miteinander zugfest verbunden werden.

An ihrer Oberseite wird eine Schweißnaht mittels Reib-Rühr-Schweißen (FSW) gezogen, welche die Profilelemente oberseitig miteinander verbindet. Durch diese Schweiß-verbindung in Zusammenwirkung mit der Hakenverbindung sind somit die Profilelemente biegesteif miteinander verbunden.

Aus der EP 0 797 043 A2 oder der US 2001/0011673 A1 ist es bekannt, großflächige und dünnwandige Paneele mittels Reib-Rühr-Schweißen miteinander zu verbinden. Eine Vorrichtung der hier angesprochenen Art ist auch aus der JP 11 267 859 A, die als nächstliegender Stand der Technik angesehen wirds, der EP 1 055 478 A1 und der JP 11 350616 A sowie der EP 1 621 282 A1 bekannt.

Als nachteilig wird bei diesen Anordnungen angesehen, dass einerseits die Festigkeit der Verbindung relativ gering ist, andererseits muss ein sehr hoher Aufwand bei der Herstellung insbesondere wegen der bei der Herstellung großer Verbindungselemente notwendigen Spannvorrichtung getrieben werden, welche die Profilelemente beim Schweißen in einer engen und präzisen Verbindung miteinander hält.

Aus der DE 102 24 198 C1 ist ebenfalls bekannt, dass man Paneele mittels Reib-Rühr-Schweißen miteinander verbinden kann. Bei einer der dort gezeigten Ausführungsformen werden die Paneele randseitig aneinander verhakt, wobei die Verhakung allerdings derart ausgebildet ist, dass zum einen ein erhöhter Materialaufwand notwendig ist, zum anderen ein aufwändiges Spannwerkzeug Verwendung finden muss, um ein korrektes Verschweißen sicher zu stellen.

Der Erfindung liegt die Aufgabe zu Grunde, ein Verbindungselement aufzuzeigen, mittels dessen bei geringem Aufwand Bauteile miteinander verbindbar sind, wobei die Verbindungselemente leicht ausgebildet sein sollen.

Diese Aufgabe wird durch ein Verbindungselement nach Patentanspruch 1 gelöst.

Insbesondere wird die Aufgabe durch ein Verbindungselement zum Verbinden von zwei Bauteilen, insbesondere von flächigen Bauteilen zur Bildung von Paneelen, umfassend mindestens zwei aneinander schweißbare Profilelemente, wobei jedes Profilelement als Strangpress-Hohlprofil gefertigt ist und mindestens im Bereich von Längsrändern eine obere Deckfläche und eine untere

Deckfläche aufweist und wobei beim Schweißen, insbesondere beim Reib-Rühr-Schweißen eine durch mindestens ein Schweißwerkzeug aufgebrachte Aufdruckkraft im Wesentlichen senkrecht zu den Deckflächen wirkt, wobei die Profilelemente Spannelemente umfassen, von denen mindestens Teile einstückig mit den Profilelementen ausgebildet sind, über welche die Profilelemente miteinander verbindbar sind, wobei die Spannelemente derart ausgebildet sind, dass die Andruckkraft über die Spannelemente mindestens teilweise in eine Horizontalkraft umgelenkt wird, welche die Profilelemente aneinander drückt bzw. zueinander bewegt, wobei die Spannelemente zur Andruckkraft schräg verlaufende Flächen umfassen, die derart ausgebildet und angeordnet sind, dass beim Einwirken der Andruckkraft (Fₛ) die Schrägflächen auf einander zur Erzeugung der Horizontalkraft (Fₕ) verschiebbar sind, wobei die Längsränder der oberen Deckfläche gegen die Längsränder der unteren Deckfläche durch ein einziges Stützelement gegeneinander abgestützt sind und/oder bezogen auf die Deckflächen senkrecht übereinander stehen, wobei die Spannelemente im Wesentlichen derart symmetrisch zu einer Ebene angeordnet sind, die in der Mitte zwischen der oberen und der unteren Deckfläche und parallel zu diesen angeordnet ist, dass sowohl die oberen Deckflächen als auch die unteren Deckflächen zweier Profilelemente mit gleichartigen Schweißwerkzeugen miteinander verschweißbar sind, gelöst.

Ein wesentlicher Punkt der Erfindung liegt also darin, dass die Spannelemente, welche die ansonsten notwendige externe Spannvorrichtung ersetzen und die aneinander zu schweißenden Bauteile, insbesondere Profilelemente gegeneinander drücken, als Teile der Profilelemente bzw. des Bauelements oder Paneels gefertigt sind. Damit entfallen die nicht unerheblichen Kosten für eine externe Spannvorrichtung und die Fertigung selbst wird erheblich vereinfacht. Dadurch wiederum, dass die vom Schweißwerkzeug bzw. den Schweißwerkzeugen aufgebrachte Kraft in die notwendige Spannkraft umgesetzt wird, können bei erhöhter Anpresskraft (wie sie gerade beim Reib-Rühr-Schweißen auftritt) die Profilelemente nicht entgegen der fest voreingestellten Andruckkraft eine externe Spannvorrichtung auseinander drücken, vielmehr wird bei erhöhter Anpresskraft der Schweißwerkzeuge auch gleichzeitig die Anpresskraft der Profilelemente gegeneinander verstärkt. An dieser Stelle sei aber auch ausdrücklich darauf verwiesen, dass die Erfindung nicht nur bei der Herstellung großflächiger Verbindungselemente verwendbar ist, sondern sich auch zum Verbinden im Wesentlichen beliebig geformter Bauteile eignet. Der Begriff "Verbindungselement" ist also auch ganz allgemein als "Bauteil" zu verstehen.

Vorzugsweise sind Stützelemente zwischen der oberen und der unteren Deckfläche vorgesehen, welche diese gegeneinander abstützen und die Andruckkraft der Schweißwerkzeuge abfangen. Dadurch kann auch bei sehr dünnen Deckflächen eine hohe Andruckkraft aufgebracht werden. Vorteilhafterweise umfassen die Spannelemente mindestens Teile der Stützelemente.

Die Spannelemente werden vorzugsweise derart ausgebildet, dass die Deckflächen der Profilelemente mit ihren jeweiligen Rändern beim Schweißen aneinander gedrückt werden. Es kann also ein Stumpfschweißen durchgeführt werden.

Die Spannelemente werden vorzugsweise derart ausgebildet und angeordnet, dass sie beim Schweißen mit den Deckflächen verschweißt werden. Damit dienen sie gleichzeitig zur Verstärkung des entstehenden Verbindungselements.

Die Spannelemente werden vorzugsweise derart elastisch federnd ausgebildet, dass die Profilelemente miteinander in einen Schnappeingriff bringbar sind. Es können also die Profilelemente durch einen einfachen Handgriff aneinander gekoppelt und dann fest miteinander verschweißt werden.

Die Spannelemente können zur Sicherstellung des eingangs beschriebenen "Spann-prinzips" sehr verschieden ausgebildet sein. Insbesondere können die Spannelemente auch gleichzeitig die Schnappeingriffsverbindung darstellen.

Alternativ oder auch zusätzlich können die Spannelemente eine Hebelanordnung umfassen, welche derart angeordnet und ausgebildet ist, dass die Andruckkraft mindestens teilweise in die Horizontalkraft umlenkbar ist. Derartige Hebelanordnungen können gleichzeitig als Versteifungselemente ausgebildet sein, wobei die Hebelanordnungen keine echten Gelenke aufweisen müssen, sondern lediglich aufgrund ihrer geometrischen Formgebung mit Biegebereichen arbeiten können.

Insbesondere ist es von Vorteil, wenn die Profilelemente aus Aluminium gefertigt sind. In dieser Fertigungsart können auch relativ komplizierte Formen kostengünstig hergestellt werden.

Wenn die Spannelemente an den Längsrändern der Profilelemente spiegelsymmetrisch ausgebildet sind, so ist es möglich, mit einer einzigen Art von Randabdeckungselementen zu arbeiten, welche die äußeren Ränder des Verbindungselements bilden.

Die Verbindungselemente können selbst schon Profilelemente in ihrer Gesamtheit darstellen, die zur Bildung von Paneelen aneinander geschweißt werden. Es ist aber auch möglich, die Verbindungselemente derart auszubilden, dass andersartig hergestellte Elemente, z.B. Profilelemente aus Wabenmaterial miteinander verbunden werden. In diesem Fall werden die zur Verbindung benötigten Profilelemente, die aufgrund ihrer geringen Ausdehnung sehr leicht handhabbar sind, mit den Elementen aus Wabenmaterial z.B. durch Kleben verbunden. Die so mit den Verbindungselementen ausgestatteten Flächenelemente können dann leicht durch Reib-Rühr-Schweißen miteinander verbunden werden.

Bevorzugte Ausführungsformen der Erfindung ergeben sich aus den Unteransprüchen.

Nachfolgend werden Ausführungsbeispiele der Erfindung anhand von Abbildungen näher erläutert. Hierbei zeigen
- - Fig. 1: eine erste bevorzugte Ausführungsform der Erfindung in einer Schnittdarstellung bei unzusammengebautem Verbindungselement;
- - Fig. 2: zwei zusammengesetzte Profilabschnitte mit aufgesetzten Schweißwerkzeugen;
- - Fig. 3: die Ausführungsform nach den Fig. 1 und 2 im verschweißten Zustand;
- - Fig. 4 - 8: Verschiedene Ausführungsformen der Bauteile;
- - Fig. 9: eine zweite Ausführungsform der Erfindung zur Darstellung der Spannelemente;
- - Fig. 10: eine dritte Ausführungsform der Erfindung mit einem zentralen Spannelement; und
- - Fig. 11: eine Ausführungsform der Erfindung ähnlich der nach Fig. 5, jedoch mit alternativen Spannelementen.

In der nachfolgenden Beschreibung werden für gleiche und gleich wirkende Teil dieselben Bezugsziffern verwendet.

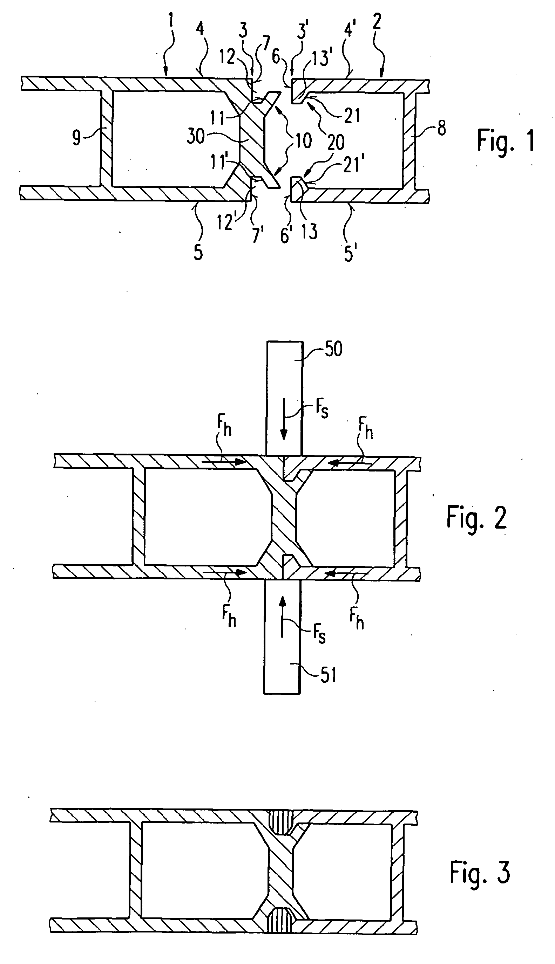

In Fig. 1 sind Randabschnitte von zwei Profilelementen 1, 2 im Querschnitt gezeigt. Die Profilelemente 1, 2 weisen Längsränder 3, 3' auf, die einander zugewandt sind. Zumindest im Bereich der Längsränder 3, 3', im Allgemeinen aber über die gesamte Fläche der Profilelemente 1, 2 hinweg sind obere Deckflächen 4, 4' und untere Deckflächen 5, 5' vorgesehen. Ränder 6, 6' bzw. 7, 7' der Deckflächen 4, 4'; 5, 5' sind ebenfalls einander zugewandt angeordnet.

Am Längsrand 3 des einen Profilelements 1 sind Nuten 12, 12' vorgesehen, welche an ihrer einen Seite von den senkrechten Deckflächenrändern 7, 7' gebildet werden und welche auf ihrer anderen, dem zweiten Profilelement zugewandten Seite Schrägflächen 11, 11' aufweisen. Korrespondierend zu diesen V-förmigen Nuten sind am anderen

Profilelement 2 Nasen 13, 13' gebildet, welche an ihrer äußeren, dem ersten Profilelement 1 zugewandten Seite die Deckflächenränder 6, 6' bilden und welche an ihren gegenüber liegenden Seiten den Schrägflächen 11, 11' korrespondierend geformte Schrägflächen 21, 21' aufweisen. Auf diese Weise wird am ersten Profilelement 1 ein Spannelement 10 und am zweiten Profilelement 2 ein Spannelement 20 gebildet.

Zum Zusammenbau von zwei Profilelementen 1, 2 wird wie folgt vorgegangen (hieraus ergibt sich, dass die Erfindung auch ein Verfahren betrifft):

Zunächst werden die Nasen 13, 13' in die Nuten 12, 12' eingehakt bzw. eingeschnappt. Um dies bewerkstelligen zu können, sind die Deckflächen 4', 5' so elastisch ausgebildet, dass ein Aufbiegen und Wiederzuschnappen in die ursprüngliche Form möglich ist. Dies gelingt relativ leicht durch eine entsprechende Formgestaltung bzw. Dimensionierung des Abstandes zwischen den Spannelementen 20 und einer ersten Stütze 8, welche die obere Deckfläche 4' mit der unteren Deckfläche 5' verbindet. Das erste Profilelement 1 weist natürlich eben solche Stützen 9 auf, so dass ein symmetrischer Aufbau entsteht.

Nach dem Einschnappen ist der in Fig. 2 gezeigte Aufbau erreicht. Dann werden Schweißwerkzeuge 50, 51 symmetrisch zu den Deckflächenrändern 6, 7 aufgesetzt und der Reib-Rühr-Schweißvorgang beginnt. Dabei werden die Schweißwerkzeuge 50, 51 mit Andruckkräften Fₛ bzw. -Fₛ auf die Deckflächen 4, 4' bzw. 5, 5' aufgesetzt, wobei diese Kräfte in einem Stützelement 30 aufgefangen werden, welches randseitig das erste Profilelement 1 abschließt und in welchem die Nuten 12, 12' sitzen. Diese Andruckkräfte Fₛ, -Fₛ lassen die Schrägflächen 21, 21' des zweiten Profilelements über die Schrägflächen 11, 11' des ersten Profilelements gleiten, so dass die Nasen 13, 13' in die Nuten 12, 12' fester hineingedrückt werden. Durch diese Anordnung werden also die Andruckkräfte F₅, bzw. -Fₛ teilweise überführt in Horizontalkräfte Fₕ, bzw. -Fₕ, so dass die beiden Profilelemente 1, 2 aufeinander zu bewegt bzw. gespannt werden. Beim Reib-Rühr-Schweißvorgang können also die Profilelemente 1, 2 nicht auseinanderweichen, es werden im Gegenteil ihre Längsränder 3, 3' bzw. die Deckflächenränder 6, 7 fest aneinander gedrückt.

Durch das Reib-Rühr-Schweißen wird eine Materialverbindung bis zu einer gewissen Tiefe erzielt, wobei das Ergebnis in Fig. 3 gezeigt ist. Hieraus ist ersichtlich, dass eine Schweißverbindung zwischen den oberen Deckflächen 4, 4' und den unteren Deckflächen 5, 5' hergestellt wird, wobei die Spannelemente zum größten Teil "verschwinden", da die Nasen 13, 13' mit dem die Nuten 12, 12' umgebenden Material der Stützelemente 30 verschweißt werden. Die Spannelemente sind somit in den endgültigen Aufbau des Verbindungselements stoffschlüssig integriert und dienen als festigkeitssteigerndes Material.

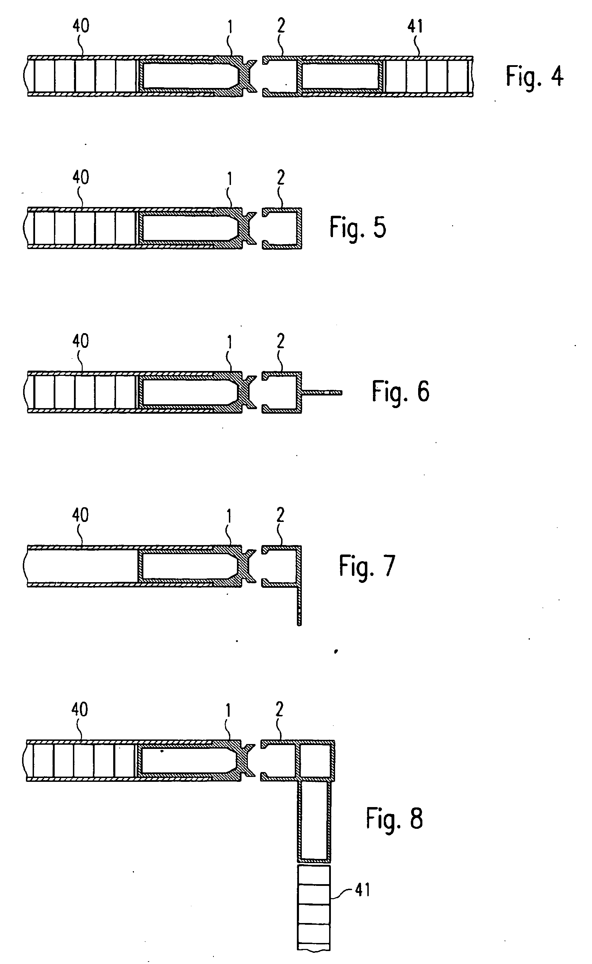

Bei der in Fig. 4 gezeigten Ausführungsform der Erfindung sind die Profilelemente 1, 2 in dem Bereich, in dem sie miteinander verschweißt werden und dabei beim Schweißen aufeinander gepresst werden, entsprechend den Ausführungsformen nach den Fig. 1 - 3 ausgestaltet. Darüber hinaus sind die Profilelemente 1, 2 an ihren, den Verbindungsstellen abgewandten Seiten derart ausgebildet, dass sie mit Bauteilen 40, 41 z.B. durch Kleben verbunden werden kann. Diese Bauteile 40, 41 sind bei dem in den Fig. 4 - 6 und 8 gezeigten Anordnungen Platten oder Paneele, bei denen über Waben miteinander verbundene Deckplatten aus einem Kunststoff miteinander verbunden sind. Derartige Paneele sind an sich bekannt.

Bei der in Fig. 5 gezeigten Ausführungsform ist eines der Profilelemente, nämlich, das Profilelement 2 als Randelement ausgebildet, so dass ein Bauteil 40, das mit dem ersten Profilelement 1 randseitig versehen ist, durch das Profilelement 2 abgeschlossen werden kann.

Bei der Ausführungsform nach Fig. 6 dient das randseitige Profilelement 2 nicht nur zum Abschluss des anderen Bauteils, es dient auch gleichzeitig zu dessen Befestigung z.B. an einem Rahmen und weist hierfür entsprechende Bohrungen auf. Die Ausführungsform nach Fig. 7 unterscheidet sich von der nach Fig. 6 dadurch, dass das Element zur Befestigung an Rahmen (oder dergleichen) abgewinkelt ausgebildet ist. Hieraus ist ersichtlich, dass in einfacher Weise sehr großflächige Bauteile herstellbar sind, die randseitig mit jeder Art von Verbindungselementen zu umgebenden Bauteilen, einem Rahmen oder dergleichen versehen werden können.

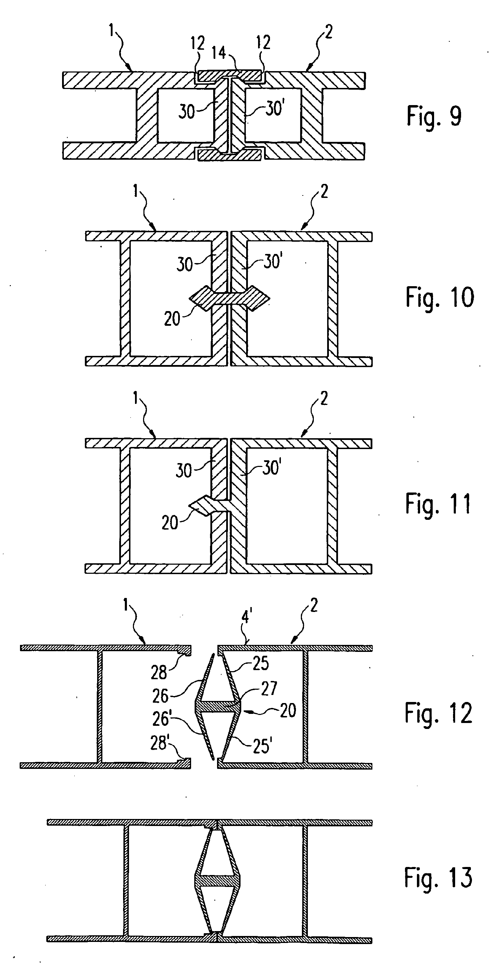

Bei der in Fig. 8 gezeigten Ausführungsform ist das zweite Profilelement 2 derart ausgestaltet, dass das zweite Bauteil 41 in einem (90°-) Winkel zum ersten Bauteil 40 an diesem befestigt werden kann. Derartige Anordnungen waren bisher nur mit allerhöchstem Aufwand und insbesondere mit sehr aufwändigen Spannwerkzeugen herstellbar. Die in Fig. 9 gezeigte Ausführungsform der Erfindung unterscheidet sich von der nach Fig. 1 dadurch, dass ein vollständig symmetrischer Aufbau getroffen ist. Bei dieser Ausführungsform sind an beiden Profilelementen 1, 2 bzw. an deren Rändern Stützelemente 30, 30' vorgesehen, welche mit oberen Nuten 12 bzw. unteren Nuten 12' versehen sind, welche die oben beschriebenen Schrägflächen 11, 11' aufweisen. Um die beiden Profilelemente 1, 2 zu verbinden, sind Koppelelemente 14, 14' vorgesehen, die ebenfalls mit Nuten mit Schrägflächen derart versehen sind, dass die Koppelelemente 14, 14' in die Nuten 12, 12' einsetzbar sind und dabei die genannten Schrägflächen aufeinander treffen. Beim Verschweißen werden also auch durch diese Ausführungsform der Erfindung die beiden Profilelemente 1, 2 mit ihren Rändern aneinander gepresst.

Bei der in Fig. 10 gezeigten Ausführungsform der Erfindung sind in den randseitigen Stützelementen 30, 30' der beiden Profilelemente 1, 2 sich nach innen V-förmig erweiternde Schlitze vorgesehen, in welche ein Profilstab als Spannelement 20 einsetzbar ist. Dieser Profilstab 20 weist den V-förmigen Schlitzen in der Form entsprechende Schrägflächen auf. Es liegt also auch dieser Ausführungsform wieder dasselbe Prinzip zu Grunde, dass dann, wenn das Spannelement 20 in die Schlitze der Stützelemente 30, 30' eingesetzt ist und die Schweißkräfte von oben und unten auf die Stützelemente 30, 30' wirken, die Schrägflächen (der V-förmigen Schlitze) auf den Schrägflächen des Spannelements 20 herunter gleiten können und somit die beiden Profilelemente 1, 2 aneinander gepresst werden.

Die Ausführungsform nach Fig. 11 unterscheidet sich von der nach Fig. 5 darin, dass das Spannelement 20 mit dem Stützelement 30' des zweiten Profilelements 2 einstückig verbunden ist. Der V-förmige Schlitz sitzt also nur im Stützelement 30 des ersten Profilelementes. Die Wirkung ist ansonsten dieselbe wie bei der Ausführungsform nach Fig. 10.

Aus Obigem geht hervor, dass ein wesentlicher Vorteil der Erfindung darin liegt, dass in einfacher Weise Bauteile exakt miteinander verbindbar sind. Dies wird unter anderem dadurch erreicht, dass die Nahtstellen, die durch Reib-Rühr-Schweißen miteinander zu verbinden sind, senkrecht übereinander liegen, so dass keine Drehmomente beim Reib-Rühr-Schweißen auftreten, die durch aufwändige Spannvorrichtungen abgefangen werden müssten. Hierbei ist zu bedenken, dass die beim Reib-Rühr-Schweißen auftretenden Kräfte ganz erheblich sind. Bei einem Werkzeug von 10 mm Durchmesser wird eine Kraft von ca. 6000 N aufgewendet, so dass unsymmetrische Anordnungen zu einem sehr erheblichen Drehmoment führen würden, welches zum einen die Bauteile verbiegt, zum anderen durch die genannten Vorrichtungen aufgefangen werden müsste. Zusätzlich (oder alternativ) zu den genannten Symmetrieeigenschaften der erfindungsgemäßen Bauteile wird bei den Ausführungsformen nach den Fig. 1 - 8 lediglich eine einzige Stütze zwischen den Deckflächen benötigt, so dass die Bauteile relativ massearm sind. Bei den Ausführungsformen nach den Fig. 9 - 11 werden zwar zwei derartige Stützwände benötigt, jedoch können diese aufgrund der genannten Symmetrieeigenschaften sehr schlank gestaltet sein, was bei unsymmetrisch angeordneten Stützen zwischen den Deckflächen aufgrund der Notwendigkeit, Drehmomente aufzunehmen, nicht möglich wäre.

### Bezugszeichenliste

- 1: Profilelement
- 2: Profilelement
- 3, 3': Längsrand
- 4, 4': obere Deckfläche
- 5, 5': untere Deckfläche
- 6: Deckflächenrand
- 7: Deckflächenrand
- 8: Stütze
- 10: Spannelement
- 11, 11': Schrägfläche
- 12, 12': Nut
- 13, 13': Nase
- 14, 14': Koppelelement
- 20: Spannelement
- 21, 21': Schrägfläche
- 25, 25': innerer Knickhebel
- 26, 26': äußerer Knickhebel
- 27: Verbindungsstrebe
- 28, 28': Rastkerbe
- 30, 30': Stützelement
- 40: Bauteil
- 41: Bauteil
- 50: Schweißwerkzeug
- 51: Schweißwerkzeug
- Fₛ: Andruckkraft
- Fₕ: Horizontalkraft

## Patentansprüche

1. Verbindungselement zum Verbindung von zwei Bauteilen, insbesondere von flächigen Bauteilen zur Bildung von Paneelen, umfassend mindestens zwei aneinander schweißbare Profilelemente (1, 2), wobei
jedes Profilelement (1, 2) als Strangpress-Hohlprofil gefertigt ist und mindestens im Bereich von Längsrändern (3, 3') eine obere Deckfläche (4, 4') und eine untere Deckfläche (5, 5') aufweist und wobei beim Schweißen, insbesondere beim Reib-Rühr-Schweißen (FSW) eine durch mindestens ein Schweißwerkzeug (50, 51) aufgebrachte Aufdruckkraft im Wesentlichen senkrecht zu den Deckflächen (4, 4'; 5, 5') wirkt, wobei
die Profilelemente (1, 2) Spannelemente (10, 20) umfassen, von denen mindestens Teile einstückig mit den Profilelementen (1, 2) ausgebildet sind, über welche die Profilelemente (1, 2) miteinander verbindbar sind, wobei die Spannelemente (10, 20) derart ausgebildet sind, dass die Andruckkraft (Fₛ, - Fₛ) über die Spannelemente (10, 20) mindestens teilweise in eine Horizontalkraft (Fₕ, -Fₕ) umgelenkt wird, welche die Profilelemente (1, 2) aneinanderdrückt bzw. zueinander zu bewegt, wobei die Spannelemente (10, 20) zur Andruckkraft schräg verlaufende Flächen (11, 11'; 21, 21') umfassen, die derart ausgebildet und angeordnet sind, dass beim Einwirken der Andruckkraft (Fₛ) die Schrägflächen (11, 21; 11', 21') auf einander zur Erzeugung der Horizontalkraft (Fₕ) verschiebbar sind, wobei die Längsränder (6, 7) der oberen Deckfläche (4, 4') gegen die Längsränder (6', 7') der unteren Deckfläche (5, 5') durch ein einziges Stützelement (30) gegeneinander abgestützt sind und/oder bezogen auf die Deckflächen (4, 4'; 5, 5') senkrecht übereinander stehen,
wobei
die Spannelemente (10, 20) im Wesentlichen derart symmetrisch zu einer Ebene angeordnet sind, die in der Mitte zwischen der oberen und der unteren Deckfläche (4, 5) und parallel zu diesen angeordnet ist, dass sowohl die oberen Deckflächen (4, 4') als auch die unteren Deckflächen (5, 5') zweier Profilelemente (1, 2) mit gleichartigen Schweißwerkzeugen (50, 51) miteinander verschweißbar sind.

2. Verbindungselement nach Anspruch 1,
**dadurch gekennzeichnet, dass**
die Stützelemente (30, 30') zwischen der oberen und der unteren Deckfläche (4, 5) diese gegeneinander abstützend zum Auffangen der Andruckkraft (Fₛ) vorgesehen sind.

3. Verbindungselement nach einem der vorhergehenden Ansprüche, insbesondere nach Anspruch 2,
**dadurch gekennzeichnet, dass**
die Spannelemente (10, 20) mindestens Teile der Stützelemente (30, 30') umfassen.

4. Verbindungselement nach einem der vorhergehenden Ansprüche,
**dadurch gekennzeichnet, dass**
die Spannelemente (10, 20) derart ausgebildet sind, dass die Deckflächen (4, 5) der Profilelemente (1, 2) mit ihren jeweiligen Rändern (6, 7) beim Schweißen aneinander gedrückt werden.

5. Verbindungselement nach einem der vorhergehenden Ansprüche,
**dadurch gekennzeichnet, dass**
die Spannelemente (10, 20) derart ausgebildet und angeordnet sind, dass sie beim Schweißen mit den Deckflächen (4, 5) verschweißt werden.

6. Verbindungselement nach einem der vorhergehenden Ansprüche,
**dadurch gekennzeichnet, dass**
die Spannelemente (10, 20) derart elastisch federnd ausgebildet sind, dass die
Profilelemente (1, 2) miteinander in einen Schnappeingriff bringbar sind.

7. Verbindungselement nach einem der vorhergehenden Ansprüche,
**dadurch gekennzeichnet, dass**
die Spannelemente (10, 20) eine Hebelanordnung (25 - 27) umfassen, welche derart angeordnet und ausgebildet ist, dass die Andruckkraft (Fₛ) mindestens teilweise in die Horizontalkraft (Fₕ) umlenkbar ist.

8. Verbindungselement nach einem der vorhergehenden Ansprüche,
**dadurch gekennzeichnet, dass**
die Spannelemente (10, 20) an den Längsrändern (3, 3') der Profilelemente (1, 2) spiegelsymmetrisch ausgebildet sind.

9. Verbindungselement nach einem der vorhergehenden Ansprüche,
**dadurch gekennzeichnet, dass**
die Profilelemente (1, 2) aus Aluminium gefertigt sind.

## Claims

1. Joining element for joining two structural parts, especially planar parts for forming panels, comprising at least two profiled elements (1, 2) which can be welded to one another,
each profiled element (1, 2) being produced as an extruded hollow profile and having, at least in the region of longitudinal edges (3, 3'), an upper outer area (4, 4') and a lower outer area (5, 5') and
a pressing force that is applied by at least one welding tool (50, 51) during welding, especially during friction stir welding (FSW), acting substantially perpendicularly to the outer areas (4, 4'; 5, 5'), the profiled elements (1, 2) comprising clamping elements (10, 20), at least parts of which are formed in one piece with the profiled elements (1, 2) and allow the profiled elements (1, 2) to be joined to one another, the clamping elements (10, 20) being formed in such a way that the pressing force (Fₛ, -Fₛ) is deflected by means of the clamping elements (10, 20) at least partially into a horizontal force (Fₕ, -Fₕ), which presses the profiled elements (1, 2) against one another or moves them in relation to one another, the clamping elements (10, 20) comprising surfaces (11, 11'; 21, 21') which are inclined in relation to the pressing force and are formed and arranged in such a way that, when the pressing force (Fₛ) acts, the inclined surfaces (11, 21; 11', 21') can be displaced towards one another to produce the horizontal force (Fₕ), the longitudinal edges (6, 7) of the upper outer area (4, 4') being supported with respect to the longitudinal edges (6', 7') of the lower outer area (5, 5') and vice versa by a single supporting element (30) and/or standing vertically one above the other with reference to the outer areas (4, 4'; 5, 5'), the clamping elements (10, 20) being arranged substantially symmetrically in relation to a plane that is arranged midway between the upper and lower outer areas (4, 5') and parallel to them in such a way that both the upper outer areas (4, 4') and the lower outer areas (5, 5') of two profiled elements (1, 2) can be welded to one another with welding tools (50, 51) of the same type.

2. Joining element according to Claim 1, **characterized in that** the supporting elements (30, 30') are provided between the upper and lower outer areas (4, 5) such that they support the latter with respect to one another to absorb the pressing force (Fₛ).

3. Joining element according to one of the preceding claims, in particular according to Claim 2, **characterized in that** the clamping elements (10, 20) comprise at least parts of the supporting elements (30, 30').

4. Joining element according to one of the preceding claims, **characterized in that** the clamping elements (10, 20) are formed in such a way that the outer areas (4, 5) of the profiled elements (1, 2) are pressed against one another with their respective edges (6, 7) during welding.

5. Joining element according to one of the preceding claims, **characterized in that** the clamping elements (10, 20) are formed and arranged in such a way that they are welded to the outer areas (4, 5) during welding.

6. Joining element according to one of the preceding claims, **characterized in that** the clamping elements (10, 20) are formed in an elastically resilient manner in such a way that the profiled elements (1, 2) can be brought into snap-in engagement with one another.

7. Joining element according to one of the preceding claims, **characterized in that** the clamping elements (10, 20) comprise a lever arrangement (25 - 27), which is arranged and formed in such a way that the pressing force (Fₛ) can be deflected at least partially into the horizontal force (Fₕ).

8. Joining element according to one of the preceding claims, **characterized in that** the clamping elements (10, 20) are formed mirror-symmetrically at the longitudinal edges (3, 3') of the profiled elements (1, 2).

9. Joining element according to one of the preceding claims, **characterized in that** the profiled elements (1, 2) are produced from aluminium.

## Revendications

1. Elément d'assemblage pour l'assemblage de deux composants, en particulier de composants plats pour former des panneaux, comprenant au moins deux éléments profilés (1, 2) pouvant être soudés l'un à l'autre,
chaque élément profilé (1, 2) étant fabriqué sous la forme d'un profilé creux filé et présentant au moins dans la région de bords longitudinaux (3, 3') une surface de recouvrement supérieure (4, 4') et une surface de recouvrement inférieure (5, 5'), et
lors du soudage, en particulier un soudage par friction (FSW), une force de pression appliquée par au moins un outil de soudage (50, 51) agissant essentiellement perpendiculairement aux surfaces de recouvrement (4, 4' ; 5, 5'),
les éléments profilés (1, 2) comprenant des éléments de serrage (10, 20), dont au moins certaines parties sont réalisées d'une seule pièce avec les éléments profilés (1, 2), par le biais desquelles les éléments profilés (1, 2) peuvent être assemblés l'un à l'autre, les éléments de serrage (10, 20) étant réalisés de telle sorte que la force de pression (Fs' - Fs) soit déviée par les éléments de serrage (10, 20) au moins en partie dans une force horizontale (Fh' - Fh) qui presse l'un contre l'autre ou déplace l'un vers l'autre les éléments profilés (1, 2), les éléments de serrage (10, 20) comprenant des surfaces (11, 11' ; 21, 21') s'étendant obliquement par rapport à la force de pression, lesquelles surfaces sont réalisées et disposées de telle sorte que lors de l'application de la force de pression (Fs), les surfaces obliques (11, 21 ; 11', 21') puissent être déplacées l'une vers l'autre pour produire la force horizontale (Fh), les bords longitudinaux (6, 7) de la surface de recouvrement supérieure (4, 4') étant supportés contre les bords longitudinaux (6', 7') de la surface de recouvrement inférieure (5, 5') par un élément de support unique (30), et/ou se tenant verticalement les uns au-dessus des autres par rapport aux surfaces de recouvrement (4, 4' ; 5, 5'),
les éléments de serrage (10, 20) étant disposés essentiellement symétriquement par rapport à un plan qui est disposé au centre entre la surface de recouvrement supérieure et la surface de recouvrement inférieure (4, 5) et parallèlement à celles-ci, de telle sorte que les surfaces de recouvrement supérieures (4, 4') et les surfaces de recouvrement inférieures (5, 5') de deux éléments profilés (1, 2) puissent être soudées les unes aux autres avec des outils de soudage de même type (50, 51).

2. Elément d'assemblage selon la revendication 1,
**caractérisé en ce que**
les éléments de support (30, 30') sont prévus entre la surface de recouvrement supérieure et la surface de recouvrement inférieure (4, 5) en supportant celles-ci l'une contre l'autre, pour absorber la force de pression (Fs).

3. Elément d'assemblage selon l'une quelconque des revendications précédentes, en particulier selon la revendication 2,
**caractérisé en ce que**
les éléments de serrage (10, 20) comprennent au moins des parties des éléments de support (30, 30').

4. Elément d'assemblage selon l'une quelconque des revendications précédentes,
**caractérisé en ce que**
les éléments de serrage (10, 20) sont réalisés de telle sorte que les surfaces de recouvrement (4, 5) des éléments profilés (1, 2) soient pressées l'une contre l'autre avec leurs bords respectifs (6, 7) lors du soudage.

5. Elément d'assemblage selon l'une quelconque des revendications précédentes,
**caractérisé en ce que**
les éléments de serrage (10, 20) sont réalisés et disposés de telle sorte qu'ils soient soudés aux surfaces de recouvrement (4, 5) lors du soudage.

6. Elément d'assemblage selon l'une quelconque des revendications précédentes,
**caractérisé en ce que**
les éléments de serrage (10, 20) sont réalisés de manière élastique à ressort de telle sorte que les éléments profilés (1, 2) puissent être amenés en engagement d'encliquetage l'un avec l'autre.

7. Elément d'assemblage selon l'une quelconque des revendications précédentes,
**caractérisé en ce que**
les éléments de serrage (10, 20) comprennent un agencement de levier (25 - 27), qui est disposé et réalisé de telle sorte que la force de pression (Fs) puisse être déviée au moins en partie dans la force horizontale (Fh).

8. Elément d'assemblage selon l'une quelconque des revendications précédentes,
**caractérisé en ce que**
les éléments de serrage (10, 20) sont réalisés avec une symétrie spéculaire au niveau des bords longitudinaux (3, 3') des éléments profilés (1, 2).

9. Elément d'assemblage selon l'une quelconque des revendications précédentes,
**caractérisé en ce que**
les éléments profilés (1, 2) sont fabriqués en aluminium.
